# EUROPÄISCHE PATENTSCHRIFT

(11) **EP 3 893 476 B1**
(45) Veröffentlichungstag und Bekanntmachung des Hinweises auf die Patenterteilung: **24.05.2023**
(21) Anmeldenummer: 20169000.5
(22) Anmeldetag: 09.04.2020
(51) Int. Cl.: H04M 3/42

(54) **VERFAHREN ZUR VERBESSERTEN IDENTIFIZIERUNG UND/ODER AUTHENTIFIZIERUNG EINES NUTZERS IM RAHMEN EINER TELEFONVERBINDUNG ODER EINES SPRACHANRUFS DES NUTZERS MIT EINEM SPRACHTELEFONIESYSTEM, SYSTEM, TELEKOMMUNIKATIONSNETZ, COMPUTERPROGRAMM UND COMPUTERLESBARES MEDIUM**
METHOD FOR IMPROVED IDENTIFICATION AND / OR AUTHENTICATION OF A USER IN THE CONTEXT OF A TELEPHONE CONNECTION OR A VOICE CALL OF THE USER WITH A VOICE TELEPHONE SYSTEM, SYSTEM, TELECOMMUNICATION NETWORK, COMPUTER PROGRAM AND COMPUTER READABLE MEDIUM
PROCÉDÉ D'IDENTIFICATION ET/OU D'AUTHENTIFICATION AMÉLIORÉE D'UN UTILISATEUR DANS LE CADRE D'UNE CONNEXION TÉLÉPHONIQUE OU D'UN APPEL VOCAL DE L'UTILISATEUR À L'AIDE D'UN SYSTÈME TÉLÉPHONIQUE VOCAL, SYSTÈME, RÉSEAU DE TÉLÉCOMMUNICATION, PROGRAMME INFORMATIQUE ET SUPPORT LISIBLE PAR ORDINATEUR

(43) Veröffentlichungstag der Anmeldung: 13.10.2021
(73) Patentinhaber: Deutsche Telekom AG, 53113 Bonn (DE)
(72) Erfinder: MÜLLER, Ingo, 64297 Darmstadt (DE)
(74) Vertreter: Schwöbel, Thilo K.

(56) Entgegenhaltungen:
- US-A1- 2005 041 784
- US-A1- 2008 159 488
- US-A1- 2017 134 574
- US-A1- 2018 342 121
- US-B1- 8 483 365
- FUJII HARUHIKO ET AL: "Three-Factor User Authentication Method Using Biometrics Challenge Response", 1. April 2013 (2013-04-01), ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, PAGE(S) 395 - 396, XP047037655, ISBN: 978-3-642-17318-9 * das ganze Dokument *

## Beschreibung

### Stand der Technik

Die Erfindung betrifft ein Verfahren zur verbesserten Identifizierung und/oder Authentifizierung eines Nutzers im Rahmen einer Telefonverbindung oder eines Sprachanrus des Nutzers mit einem Sprachtelefoniesystem, wobei bezüglich einer Mehrzahl von Nutzern jeweils wenigstens eine Sprechermerkmalsinformation zusammen mit jeweils wenigstens einer Anruferkennungsinformation vorliegt oder zugreifbar ist.

Die Erfindung betrifft des Weiteren ein System, insbesondere Sprachtelefoniesystem, zur verbesserten Identifizierung und/oder Authentifizierung eines Nutzers im Rahmen einer Telefonverbindung oder eines Sprachanrufs des Nutzers mit einem Sprachtelefoniesystem, wobei bezüglich einer Mehrzahl von Nutzern jeweils wenigstens eine Sprechermerkmalsinformation zusammen mit jeweils wenigstens einer Anruferkennungsinformation vorliegt oder zugreifbar ist.

Die Erfindung betrifft ferner ein Telekommunikationsnetz mit einem erfindungsgemäßen System bzw. einem erfindungsgemäßen Sprachtelefoniesystem.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt, mit deren Hilfe die Schritte des erfindungsgemäßen Verfahrens durchführbar sind.

Es ist allgemein bekannt, Menschen bzw. deren individuelle Spracheigenschaften bzw. Sprachmerkmale maschinell anhand der spezifischen Charakteristika ihrer Sprache bzw. ihrer akustisch detektierbaren Spezifika (Sprechermerkmalsinformation bzw. Voice-Print) zu erkennen. In diesem Zusammenhang ist es ferner auch bekannt, dies für die sprachbasierte Sprechererkennung und/oder eine sprachbasierende Zugriffskontrolle zu verwenden. Allerdings ist der Vergleich von Sprach-Proben mit vorliegenden Voice-Prints sehr rechenintensiv, so dass es problematisch ist, eine große Anzahl von für eine entsprechende Anzahl von Menschen bzw. Nutzern erstellte Voice-Prints bzw. eine große Anzahl solcher Sprechermerkmalsinformationen zu durchsuchen, d.h. zu prüfen, ob das Sprachmuster einer vorgegebenen Sprachprobe (mit hinreichender Genauigkeit) mit einem Muster bzw. mit der Sprechermerkmalsinformation einer großen Anzahl unterschiedlicher Sprechermerkmalsinformationen übereinstimmt.

Der Stand der Technik, der die Authentifizierung mithilfe von Stimmabdrücken beschreibt, ist in den Veröffentlichungen US2018342121, US2005041784, US8483365, US2008159488, US2017134574 und FUJII HARUHIKO ET AL: "Three-Factor User Authentication Method Using Biometrics Challenge Response" von der ANNUAL INTERNATIONAL CONFERENCE ON THE THE THEORY AND APPLICATIONS OF CRYPTOGRAPHIC TECHNIQUES, EUROCRYPT 2018 beschrieben.

### Offenbarung der Erfindung

Der Erfindung liegt die Aufgabe zugrunde, ein optimiertes Verfahren - sowie ein System - zur verbesserten Identifizierung und/oder Authentifizierung eines Nutzers im Rahmen einer Telefonverbindung oder eines Sprachanrufs des Nutzers mit einem Sprachtelefoniesystem zur Verfügung zu stellen, so dass mittels einer Bezugnahme jeweils wenigstens einer Sprechermerkmalsinformation auf jeweils wenigstens eine Anruferkennungsinformation auch für eine Vielzahl von Nutzern eine effiziente Identifizierung und/oder Authentifizierung des Nutzers möglich ist.

Die Aufgabe wird erfindungsgemäß gelöst durch ein Verfahren nach Anspruch 1.

Es ist dadurch gemäß der vorliegenden Erfindung in vorteilhafter Weise möglich, dass ein Verfahren zur besseren und schnelleren Detektion bzw. zum besseren und schnelleren Auffinden einer gespeicherten Sprechermerkmalsinformation zu einer erfassten Sprachinformation eines Nutzers, insbesondere einer während der Dauer der Telefonverbindung oder des Sprachanrufs erfassten Sprachinformation des Nutzers, bereitgestellt wird, d.h. insbesondere ein Verfahren zur technischen Eingrenzung des möglichen Nutzerkreises von Sprechererkennungs-- und sprachbasierten Authentifizierungs-Diensten (etwa für Mobilfunk- oder Festnetzkunden) möglich ist. Erfindungsgemäß ist bezüglich einer Mehrzahl von Nutzern (bzw. Personen oder Sprechern) jeweils wenigstens eine Sprechermerkmalsinformation zusammen mit jeweils (wenigstens) einer Anruferkennungsinformation vorhanden, wobei die Anruferkennungsinformation insbesondere in Form der vom Telefonnetz (über welches die Telefonverbindung oder der Sprachanruf hergestellt wird) erzeugten, bereitgestellten und übertragenen "Network Provided CLI (Customer Line Identifikation Number) vorliegt. Für den Fall, dass beispielsweise 500.000 registrierte Nutzer mit hinterlegten Voice-Prints (oder Sprechermerkmalsinformationen) vorliegen, müsste für eine Identifizierung und/oder Authentifizierung eines einzelnen dieser Vielzahl an Nutzern (d.h. letztlich bei jeder Service Nutzung mit Authentifizierungsbedarf) anhand einer Sprachprobe bzw. anhand einer (insbesondere während der Dauer der Telefonverbindung oder des Sprachanrufs) erfassten Sprachinformation die abgegebene Sprachprobe oder Sprachinformation mit allen vorhandenen Voice-Prints (bzw. Sprechermerkmalsinformationen) verglichen werden. Erfindungsgemäß ist es vorteilhaft möglich, dass die Anzahl der mit einer abgegebene Sprachprobe oder Sprachinformation zu vergleichenden gespeicherten Voice-Prints bzw. Sprechermerkmalsinformationen drastisch reduzierbar ist.
Erfindungsgemäß ist es somit insbesondere vorteilhaft möglich, dass unnötig hohe bzw. lange Kontaktzeiten des Nutzers mit dem zur Verfügung gestellten Dienst zu Zwecken der Durchführung der Identifizierung und/oder Authentifizierung und damit verbunden höhere Gesamtkosten vermieden werden können. Auch für den Nutzer ist erfindungsgemäß ein einfacherer und schnellerer Zugang zum gewünschten Dienst möglich.

Erfindungsgemäß ist es vorteilhafterweise möglich, dass eine effizientere bzw. insbesondere schnellere und treffsicherere Suche bzw. Detektion derjenigen gespeicherten Sprechermerkmalsinformation möglich ist, die für einen anrufenden (bestimmten) Nutzer (oder für die anrufende bestimmte Person bzw. den Kunden) zutrifft oder zutreffend sein könnte. In einem ersten Schritt des erfindungsgemäßen Verfahrens ist es insbesondere vorgesehen, dass - ausgehend von dem bestimmten Telekommunikationsendgerät des bestimmten Nutzers, eine Telefonverbindung oder ein Sprachanruf zum Sprachtelefoniesystem hergestellt wird. Hierbei ist dem bestimmten Telekommunikationsendgerät (oder auch dessen Anschluss oder einer sonstigen identifizierenden Einrichtung, etwa eine SIM-Karte (Subscriber Identity Module) oder auch eine embeded SIM) eine bestimmte Anruferkennungsinformation zugeordnet und diese bestimmte Anruferkennungsinformation wird bei der Herstellung der Telefonverbindung oder des Sprachanrufs zum Sprachtelefoniesystem übertragen. In einem zweiten, dem ersten Schritt nachfolgenden Schritt wird geprüft, ob bezüglich der bestimmten Anruferkennungsinformation eine bestimmte Sprechermerkmalsinformation vorliegt oder zugreifbar ist. In einem dritten, dem zweiten Schritt nachfolgenden Schritt wird - sofern die Prüfung, ob bezüglich der bestimmten Anruferkennungsinformation eine bestimmte Sprechermerkmalsinformation vorliegt oder zugreifbar ist, positiv ausfällt - geprüft, ob eine während der Dauer der Telefonverbindung oder des Sprachanrufs erfasste Sprachinformation des Nutzers (oder aber auch eine sonstige oder auf sonstigem Wege ermittelte Sprachinformation des Nutzers, insbesondere im Sinne einer Sprachprobe) eine ausreichend große Übereinstimmung mit der bestimmten Sprechermerkmalsinformation aufweist oder ergibt, wobei eine automatisierte Identifizierung und/oder Authentifizierung des bestimmten Nutzers erfolgt, wenn eine solche ausreichend große Übereinstimmung festgestellt wird. So ist es erfindungsgemäß insbesondere vorteilhaft möglich, das Verfahren für die sprachbasierte Sprechererkennung und/oder für eine sprachbasierte Zugriffskontrolle zu verwenden. Hierzu wird erfindungsgemäß zurückgegriffen auf Methoden, Menschen maschinell anhand der spezifischen Charakteristika ihrer Sprache bzw. ihrer Stimme zu erkennen. Diese umfassen in der Regel wenigstens einen ersten Teilschritt und einen zweiten Teilschritt, wobei während des ersten Teilschritts eine Sprach-Referenz für einen Menschen erzeugt bzw. erstellt wird; basierend auf einer solchen Sprach-Referenz bzw. Sprachprobe wird in der Regel eine Referenz erzeugt (und hinterlegt), so dass eine solche Person (bzw. ein solcher Mensch) maschinell anhand ihrer bzw. seiner Stimme erkannt werden kann. Schematisch geht man dabei folgendermaßen vor: Es wird eine bzw. es werden mehrere Aufnahmen der Stimme eines solchen Menschen erzeugt bzw. erfasst; diese Aufnahmen werden unter Zuhilfenahme von maschinell trainierten Modellen analysiert, wobei das Ergebnis einer solchen Analyse ein so genanntes Referenzmodell der Stimme des betreffenden Menschen ist, das im Rahmen der vorliegenden Erfindung auch als Sprechermerkmalsinformation oder als Voice-Print bezeichnet wird; typischerweise wird die Sprechermerkmalsinformation bzw. der Voice-Print in einer Datenbank gespeichert oder hinterlegt.
Grundsätzlich lassen sich bei einer solchen Aufzeichnung (bzw. Aufnahme) der Sprache einer Person die Verfahren aktive Sprechererkennung und passive Sprechererkennung unterscheiden, wobei bei der aktiven Sprechererkennung die Person aufgefordert wird, aktiv einen bestimmten Satz/eine bestimmte Folge von vorgegebenen Wörtern zu sprechen (und die Aufzeichnung hiervon als Sprach-Probe verwendet wird), während bei der passiven Sprechererkennung die Person einfach spricht (d.h. es wird nicht unbeding eine Vorgabe für den Inhalt der zu sprechenden Sprachprobe gemacht; beispielsweise könnte ein Alltagsgespräch, etwa der Grund für die Kontaktaufnahme bei der Servicestelle herangezogen werden), ohne dass sie dazu aufgefordert wird, eine vorgegebene Wortfolge zu wiederholen.
Während des zweiten Teilschritts ist es möglich, dass der Sprecher bzw. die Person auf der Grundlage seiner bzw. ihrer Stimme erkannt wird. Die Person nutzt beispielsweise einen Dienst, der eine Sprecher-Erkennung und/oder eine Nutzerauthentifizierung auf der Grundlage der Sprachsignatur (bzw. der Sprechermerkmalsinformation) integriert hat; die abgegebene Sprach-Probe wird analysiert und mit dem in der Datenbank hinterlegten Voice-Print bzw. der Sprechermerkmalsinformation verglichen.
Auf der Grundlage dieses Vergleichs wird berechnet, wie wahrscheinlich es ist, dass die Person, die die Sprach-Probe (bzw. die erfasste Sprachinformation des Nutzers) abgegeben hat und die Person, die den Voice-Print bzw. die Sprechermerkmalsinformation abgelegt hat, ein und dieselbe Person sind.
Allerdings ist der Vergleich einer vorliegenden Sprach-Probe (bzw. einer erfassten Sprachinformation eines Nutzers) mit einer Vielzahl von vorliegenden Voice-Prints oder Sprechermerkmalsinformationen ist sehr rechenintensiv; eigentlich wäre es in einem solchen Fall erforderlich, bei jeder Service Nutzung durch einen Nutzer oder Kunden die abgegebene Sprach-Probe (bzw. die Sprachinformation) mit allen vorhandenen Voice-Prints (bzw. Sprechermerkmalsinformationen) zu vergleichen. Dies mag bei Vorhandensein einer ausreichend hohen Rechnerleistung möglich sein; allerdings ist der damit einhergehende Aufwand beträchtlich und die entsprechenden Kosten ebenfalls hoch. Erfindungsgemäß wird dies dadurch vermieden, dass aufgrund einer Auswertung - im Rahmen der Telefonverbindung oder des Sprachanrufs zum Sprachtelefoniesystem - der verwendeten Anruferkennungsinformation nicht alle vorhandenen Sprechermerkmalsinformationen durchsucht bzw. mit der abgegebenen oder erfassten Sprachprobe bzw. Sprachinformation verglichen werden müssen.

Gemäß einer Ausführungsform der vorliegenden Erfindung ist es vorgesehen, dass eine automatisierte Identifizierung und/oder Authentifizierung des bestimmten Nutzers verworfen wird, wenn die Prüfung im dritten Schritt eine unzureichend große Übereinstimmung der erfassten Sprachinformation mit der bezüglich der bestimmten Anruferkennungsinformation vorliegen bestimmten Sprechermerkmalsinformation ergibt.

Dadurch ist es gemäß einer solchen Ausführungsform der Erfindung vorteilhaft möglich, dass trotz einer schnelleren Authentifizierung das Sicherheitsniveau nicht absinkt und bei nicht vorhandener Legitimierung kein Zugang für den Nutzer freigegeben wird.

Gemäß einer weiteren Ausführungsform der vorliegenden Erfindung ist es vorgesehen, dass auf der Basis der während der Dauer der Telefonverbindung oder des Sprachanrufs erfassten Sprachinformation des Nutzers eine weitere Sprechermerkmalsinformation generiert wird.

Dadurch ist es gemäß einer solchen Ausführungsform der Erfindung vorteilhaft möglich, dass für zukünftige Kontakte des Nutzers mit dem Dienst weitere Sprechermerkmalsinformationen generiert werden, so dass in Zukunft der Zugang erleichtert werden kann.

Dadurch ist es gemäß einer solchen Ausführungsform der Erfindung in vorteilhafter Weise möglich, dass eine Erhöhung der Flexibilität des Dienstzugangs möglich ist.

Gemäß einer weiteren Ausführungsform der vorliegenden Erfindung ist es vorgesehen, dass in einem sechsten, dem dritten Schritt nachfolgenden Schritt - sofern die Prüfung im dritten Schritt eine unzureichend große Übereinstimmung der erfassten Sprachinformation mit der bezüglich der bestimmten Anruferkennungsinformation vorliegen bestimmten Sprechermerkmalsinformation ergibt - eine Identifizierung und/oder Authentifizierung des bestimmten Nutzers die Übertragung von weiteren Identifizierungs und/oder Authentifizierungsinformationen erfordert, wobei auf der Basis der während der Dauer der Telefonverbindung oder des Sprachanrufs erfassten Sprachinformation des Nutzers eine weitere Sprechermerkmalsinformation generiert wird.

Hierdurch ist es gemäß der vorliegenden Erfindung insbesondere vorteilhaft möglich, dass ebenfalls eine Erhöhung der Flexibilität des Dienstzugangs möglich ist.

Gemäß einer weiteren Ausführungsform der vorliegenden Erfindung ist es vorgesehen, dass das Sprachtelefoniesystem eine Datenbankeinrichtung aufweist oder dem Sprachtelefoniesystem eine Datenbankeinrichtung zugeordnet ist, wobei in der Datenbankeinrichtung die jeweils wenigstens eine Sprechermerkmalsinformation zusammen mit der jeweils wenigstens einen Anruferkennungsinformation für die Mehrzahl von Nutzern vorliegt.

Gemäß einer Ausführungsform der vorliegenden Erfindung ist es vorgesehen, dass die Anruferkennungsinformation einer CLI-Information, Customer Line Identification Number-Information, entspricht, insbesondere einer vom Netz bereitgestellten CLI-Information, Network-provided CLI-Information.

Hierdurch ist es gemäß einer solchen Ausführungsform der Erfindung in vorteilhafter Weise möglich, dass eine weitgehend manipulationssichere Ausgestaltung des erfindungsgemäßen Verfahrens möglich ist.

Gemäß einer weiteren Ausführungsform der vorliegenden Erfindung ist es vorgesehen, dass die Sprechermerkmalsinformation einer Voice-Print-Information der menschlichen Stimme des jeweiligen Nutzers entspricht, welche insbesondere gemäß eines Referenzmodells der menschlichen Stimme erzeugt od er detektiert ist.

Gemäß einer weiteren Ausführungsform der vorliegenden Erfindung ist es vorgesehen, dass die Sprechermerkmalsinformation jeweils unter Verwendung einer passiven oder aktiven Sprecherkennung einer Sprachinformation erstellt ist oder wird, insbesondere einer während der Dauer der Telefonverbindung oder des Sprachanrufs erfasste Sprachinformation des Nutzers.

Des Weiteren wird die Aufgabe gelöst durch ein System nach Anspruch 9.

Es ist dadurch gemäß der vorliegenden Erfindung in vorteilhafter Weise möglich, ein erfindungsgemäßes System bereitzustellen.

Des Weiteren wird die Aufgabe gelöst durch ein Telekommunikationsnetz mit einem erfindunsgemäßen System, insbesondere Sprachtelefoniesystem.

Des Weiteren wird die Aufgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere als Teil des Systems, ausgeführt wird oder wenn das Computerprogramm teilweise auf der programmierbaren Einrichtung, insbesondere als Teil des Systems, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf der programmierbaren Einrichtung, insbesondere als Teil des Systems, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines Mobilfunkkommunikationsnetzes als Beispiel eines Telekommunikationsnetzes.
- Figur 2: zeigt schematisch ein erfindungsgemäßes System bzw. ein Anwendungsszenario der vorliegenden Erfindung, bei dem ein Telekommunikationsendgerät eine Telefonverbindung oder einen Sprachanruf eines Nutzers zu einem Sprachtelefoniesystem aufbaut bzw. herbeiführt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt. Die vorliegende Erfindung wird in Bezug auf bestimmte Ausführungsformen und mit Bezug auf bestimmte Zeichnungen beschrieben, aber die Erfindung ist nicht hierauf beschränkt, sondern nur durch die Ansprüche beschränkt. Die beschriebenen Zeichnungen sind nur schematisch und nicht einschränkend aufzufassen. In den Zeichnungen kann die Größe einiger Elemente übertrieben sein und nicht im Maßstab zur Veranschaulichung gezeichnet sein.

Wenn ein unbestimmter oder bestimmter Artikel verwendet wird, wenn auf ein einzelnes Substantiv Bezug genommen wird, z.B. "ein", "eine", "eines", "der", "die", "das", schließt dies einen Plural dieses Substantivs ein, sofern nicht ausdrücklich etwas anderes angegeben ist.

Darüber hinaus werden die Begriffe erster/erste/erstes, zweiter/zweite/zweites, dritter/dritte/drittes und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderen Abfolgen als den hierin beschriebenen oder veranschaulichten funktionieren können.

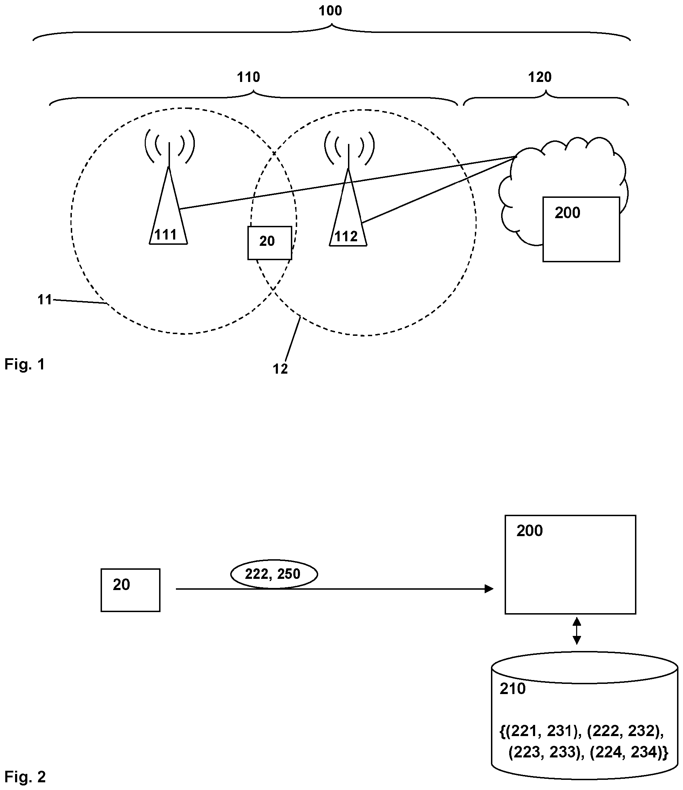

In Figur 1 ist schematisch eine Ansicht eines Mobilfunkkommunikationsnetzes als Beispiel eines Telekommunikationsnetzes 100 dargestellt, welches in der Lage ist, eine Telefonverbindung oder ein Sprachanruf eines Nutzers mit einem Sprachtelefoniesystem 200 herzustellen. Der Nutzer bzw. Kunde benutzt ein Telekommunikationsendgerät 20 zur Herstellung der Telefonverbindung bzw. des Sprachanrufs zum Sprachtelefoniesystem 200. Im Fall eines Mobilfunkkommunikationsnetzes als Beispiel eines Telekommunikationsnetzes 100 ist dieses in der Regel als zelluläres Netz umfassend ein Zugangsnetz 110 und ein Kernnetz 120 realisiert, d.h. das Zugangsnetz 110 eines solchen Mobilfunkkommunikationsnetzes weist in der Regel eine Mehrzahl an Funkzellen auf, wobei in Figur 1 der Einfachheit halber lediglich zwei Funkzellen, bezeichnet mit einem gestrichelten Kreis und den Bezugszeichen 11, 12, dargestellt ist. Typischerweise weist jede solche Funkzelle 11, 12 eine zugehörige Basisstationseinrichtung, die in Figur 1 (bezogen auf die Funkzelle 11) mit dem Bezugszeichen 111 und (bezogen auf die Funkzelle 12) mit dem Bezugszeichen 112 schematisch dargestellt sind. In einer solchen Funkzelle 11, 12 des Telekommunikationsnetzes 100 können typischerweise eine Mehrzahl von Telekommunikationsgeräten 20 bzw. Telekommunikationsendgeräten 20 vorhanden bzw. lokalisiert sein, wobei in Figur 1 jedoch lediglich eines dargestellt ist. Im Folgenden wird lediglich auf das Telekommunikationsgerät 20 (bzw. Telekommunikationsendgerät 20) Bezug genommen. Bei der Darstellung des Telekommunikationsnetzes 100 gemäß der Figur 1 wurde auch die Möglichkeit mitgedacht, dass es sich bei dem Telekommunikationsnetz 100 (alternativ zur Realisierung als Mobilfunkkommunikationsnetz) um ein Festnetz-Telekommunikationsnetz handelt. In Figur 1 ist als Teil des Kernnetzes 120 bzw. mit diesem verbunden ein Sprachtelefoniesystem 200 schematisch dargestellt, zu welchem der Aufbau einer Telefonverbindung oder eines Sprachanrufs durch das Telekommunikationsendgerät 20 (bzw. dessen Nutzer) durch das Telekommunikationsnetz 10 ermöglicht wird.

In Figur 2 ist schematisch ein erfindungsgemäßes System bzw. ein Anwendungsszenario der vorliegenden Erfindung dargestellt, bei dem das Telekommunikationsendgerät 20 eine Telefonverbindung oder einen Sprachanruf eines bzw. des Nutzers des Telekommunikationsendgeräts 20 zu einem Sprachtelefoniesystem 200 aufbaut bzw. herbeiführt. Gemäß der vorliegenden Erfindung ist es dadurch möglich, eine verbesserte und insbesondere schnellere Identifizierung und/oder Authentifizierung des Nutzers im Rahmen dadurch zu realisieren, dass für eine Vielzahl von Nutzern bereits eine Sprechermerkmalsinformation vorliegt, d.h. eine Sprachprobe - insbesondere gewonnen über eine (frühere) Telefonverbindung oder einen Sprachanrufs des Nutzers bei dem Sprachtelefoniesystem 200. Erfindungsgemäß ist es vorgesehen, dass bezüglich einer solchen Mehrzahl (oder besser Vielzahl) von Nutzern jeweils wenigstens eine Sprechermerkmalsinformation 231, 232, 233, 234 zusammen mit jeweils wenigstens einer Anruferkennungsinformation 221, 222, 223, 224 in einer Datenbankeinrichtung 210 vorliegt. Die Tatsache, dass bei der Speicherung der den verschiedenen Personen bzw. Spechern zugeordneten Sprechermerkmalsinformationen 231, 232, 233, 234 in der Datenbankeinrichtung 210 zusätzlich auch jeweils wenigstens eine Anruferkennungsinformation 221, 222, 223, 224 vorliegt bzw. zugreifbar ist, erleichtert und beschleunigt die Identifizierung und/oder Authentifizierung des Nutzers im Rahmen der Telefonverbindung oder des Sprachanrufs.

Erfindungsgemäß weist das Verfahren die folgenden Schritte auf: In einem ersten Schritt wird, ausgehend von einem bestimmten Telekommunikationsendgerät 20 eines bestimmten Nutzers, die Telefonverbindung oder der Sprachanruf zum Sprachtelefoniesystem 200 hergestellt. Bei der Herstellung dieser Telefonverbindung bzw. dieses Sprachanrufs erfolgt (etwa beim Anrufaufbau) die Übertragung der bestimmten Anruferkennungsinformation 222 (des Telekommunikationsendgeräts 20) zum Sprachtelefoniesystem 200. Hierzu ist dem bestimmten Telekommunikationsendgerät 20 oder dessen Anschluss die bestimmte Anruferkennungsinformation 222 zugeordnet. In einem zweiten, dem ersten Schritt nachfolgenden Schritt wird geprüft, ob bezüglich der bestimmten Anruferkennungsinformation 222 wenigstens eine bestimmte Sprechermerkmalsinformation 232 vorliegt oder zugreifbar ist. Im dritten, dem zweiten Schritt nachfolgenden Schritt wird - sofern die Prüfung, ob bezüglich der bestimmten Anruferkennungsinformation 222 eine bestimmte Sprechermerkmalsinformation 232 vorliegt oder zugreifbar ist, positiv ausfällt - geprüft, ob eine während der Dauer der Telefonverbindung oder des Sprachanrufs erfasste Sprachinformation 250 des Nutzers (die letzlich ebenfalls eine Sprachprobe darstellt) eine ausreichend große Übereinstimmung mit der bestimmten Sprechermerkmalsinformation 232 aufweist oder ergibt, wobei eine automatisierte Identifizierung und/oder Authentifizierung des bestimmten Nutzers erfolgt, wenn eine solche ausreichend große Übereinstimmung festgestellt wird. In Figur 2 ist beispielhaft eine erste Anruferkennungsinformation 221 einer ersten Sprechermerkmalsinformation 231 zugeordnet, eine zweite Anruferkennungsinformation 222 einer zweiten Sprechermerkmalsinformation 232 zugeordnet, eine dritte Anruferkennungsinformation 223 einer dritten Sprechermerkmalsinformation 233 zugeordnet, und eine vierte Anruferkennungsinformation 224 einer vierten Sprechermerkmalsinformation 234 zugeordnet und in der Datenbankeinrichtung 210 gespeichert; es sei angenommen, dass das Telekommunikationsendgerät 20 der zweiten Anruferkennungsinformation 222 zugeordnet sei, weshalb die zweite Anruferkennungsinformation 222 auch als die bestimmte Anruferkennungsinformation (und entsprechend die zweite Sprechermerkmalsinformation 232 als die bestimmte Sprechermerkmalsinformation) bezeichnet wird. Zusammen mit der bestimmten Anruferkennungsinformation 222 wird vom Telekommunikationsendgerät 20 auch die Sprachinformation 250 zum Sprachtelefoniesystem 200 übertragen, so dass eine verbesserte Identifizierung und/oder Authentifizierung des Nutzers bzw. Kunden allein durch diese beiden Informationen möglich ist: Durch die Zuordnung, innerhalb der Datenbankeinrichtung 210, der bestimmten Sprechermerkmalsinformation 232 zur bestimmten Anruferkennungsinformation 222 ist es in einfacher Weise möglich, mittels der zugehörigen Sprechermerkmalsinformation 232 sowie durch Analyse der Sprachinformation 250 zu prüfen, ob die anrufende Person dem authorisierten Nutzer entspricht. Diese Prüfung erfolgt in der Regel dann, wenn eine ausreichend große Übereinstimmung zwischen Charakteristika der Sprachinformation 250 mit Charakteristika der bestimmten Sprechermerkmalsinformation 232 vorliegt bzw. festgestellt wird. Für unterschiedlich kritische Zugangs- bzw. Authentifizierungssituationen bzw. unterschiedlich hohe Sicherheitsanforderungen mag es auch unterschiedlich große Maße an notwendiger Übereinstimmung zwischen der Sprachinformation 250 und der bestimmten Sprechermerkmalsinformation 232 geben. Andererseits - und falls das notwendige Maß an Übereinstimmung zwischen der Sprachinformation 250 und der bestimmten Sprechermerkmalsinformation 232 nicht erreicht wird - erfolgt keine automatisierte Identifizierung und/oder Authentifizierung des bestimmten Nutzers, d.h. die Identifizierung und/oder Authentifizierung des bestimmten Nutzers wird verworfen oder verneint. In diesem Fall setzt die Identifizierung und/oder Authentifizierung des bestimmten Nutzers die Übertragung (in einem vierten Schritt) von weiteren Identifizierungs und/oder Authentifizierungsinformationen - etwa Passwörter oder sonstige Informationen - vom Nutzer bzw. dessen Telekommunikationsendgerät 20 zum Sprachtelefoniesystem 200 voraus.

Erfindungsgemäß setzt die Benutzung der Stimme des (bestimmten) Nutzers zur Authentifizierung nicht nur voraus, dass eine Sprechermerkmalsinformation in der Datenbankeinrichtung 210 vorhanden ist, sondern auch, dass diese mit der "richtigen" Anruferkennungsinformation verknüpft bzw dieser zugeordnet ist. Wenn somit ein Nutzer mit einer neuen, zuvor noch nicht verwendeten Anruferkennungsinformation versucht, mittels (der gleichen) Stimme eine Authentifizierung zu erzielen, wird dies zunächst nicht gelingen bzw. die - zwar im Prinzip bekannte - Stimme (bzw. die zugehörige Sprechermerkmalsinformation) wird nicht ohne Weiteres gefunden. Wenn jedoch über die Eingabe von weiteren Identifizierungsinformationen oder Authentifizierungsinformationen (neben der Sprachinformation) der Nutzer (dessen Stimme bzw. Sprechermerkmalsinformation, zwar verknüpft mit einer anderen Anruferkennungsinformation, bereits in der Datenbankeinrichtung 210 vorliegt) identifiziert bzw. authentifiziert wurde, kann die bereits vorhandene Sprechermerkmalsinformation auch der neuen Anruferkennungsinformation zugeordnet werden; in diesem Fall kann die betreffende Sprechermerkmalsinformation sowohl der früheren Anruferkennungsinformation als auch der neuen (bestimmten) Anruferkennungsinformation zugeordnet sein. Somit wird in einem fünften, dem vierten Schritt nachfolgenden Schritt - sofern die Prüfung, ob bezüglich der bestimmten Anruferkennungsinformation 222 eine bestimmte Sprechermerkmalsinformation 232 vorliegt oder zugreifbar ist, negativ ausfällt und nach einer Identifizierung und/oder Authentifizierung des bestimmten Nutzers - geprüft, ob bezüglich des bestimmten Nutzers eine Sprechermerkmalsinformation vorliegt oder zugreifbar ist, wobei, sofern bezüglich des bestimmten Nutzers eine Sprechermerkmalsinformation vorliegt oder zugreifbar ist, eine Zuordnung dieser Sprechermerkmalsinformation zu der bestimmten Anruferkennungsinformation 222 (d.h. der neuen Anruferkennungsinformation) erfolgt, insbesondere eine Zuordnung dieser Sprechermerkmalsinformation zu der bestimmten Anruferkennungsinformation 222 zusätzlich zu einer weiteren Anruferkennungsinformation (d.h. der früheren Anruferkennungsinformation) erfolgt. In dieser Art ist es erfindungsgemäß möglich, die Flexibilität des erfindungsgemäßen Verfahrens dadurch zu erhöhen, dass ab diesem Zeitpunkt die Möglichkeit besteht, sowohl durch Nutzung der früheren Anruferkennungsinformation als auch der bestimmten Anruferkennungsinformation (und nach Vergleich der Sprechcharakteristika mit der gespeicherten Sprechermerkmalsinformation) die verbesserte Identifizierung und/oder Authentifizierung des Nutzers möglich ist.

Alternativ oder zusätzlich zur Variante, gemäß der einer Sprechermerkmalsinformation in der Datenbankeinrichtung 210 mehrere Anruferkennungsinformationen zugeordnet sein können, ist es erfindungsgemäß auch denkbar, dass einer Anruferkennungsinformation umgekehrt mehrere Sprechermerkmalsinformation zugeordnet sind. Dies mag etwa Fälle betreffen, bei denen mehrere Personen individuell erfindungsgemäß identifiziert und/oder authentifiziert werden sollen, die ggf. eine (bspw. Festnetz-) Telefonnummer verwenden. Es ist somit erfindunsgemäß insbesondere vorgesehen, dass in einem sechsten, dem dritten Schritt nachfolgenden Schritt - sofern die Prüfung im dritten Schritt eine unzureichend große Übereinstimmung der erfassten Sprachinformation mit der bezüglich der bestimmten Anruferkennungsinformation vorliegen bestimmten Sprechermerkmalsinformation ergibt - eine Identifizierung und/oder Authentifizierung des bestimmten Nutzers die Übertragung von weiteren Identifizierungs und/oder Authentifizierungsinformationen erfordert, wobei auf der Basis der während der Dauer der Telefonverbindung oder des Sprachanrufs erfassten Sprachinformation des Nutzers eine weitere Sprechermerkmalsinformation generiert wird.

Erfindungsgemäß ist es insbesondere vorgesehen, dass die Anruferkennungsinformation 221, 222, 223, 224 einer CLI-Information, Customer Line Identification Number-Information, entspricht, insbesondere einer vom Netz bereitgestellten CLI-Information, Network-provided CLI-Information. Hierdurch ist kann das erfindungsgemäße Verfahren besonderes gegenüber Missbrauch geschützt und somit sicher realisiert werden, weil dadurch erfindungsgemäß nicht notwendigerweise auf eine user-provided CLI zurückgegriffen werden muss. Bei der User-Provided CLI handelt es sich um die Rufnummer, die im Display des Angerufenen angezeigt werden kann. Die User-Provided CLI ist im vorliegenden Fall eher irrelevant, da sie in der Regel kein verlässlicher Parameter ist (weil durch den Anrufenden manipulierbar; z.B. indem eine Rufnummernunterdrückung aktiviert wird). Demgegenüber ist die Network-Provided CLI erfindungsgemäß geeignet, da hierbei der Telekommunikationsanbieter verpflichtet ist, sicher zu stellen, dass die hier übergebene Rufnummer nicht manipuliert wurde/bzw. werden kann. Die Network-Provided CLI wird zum Beispiel von Notrufträgern, Polizei und Gerichten dazu genutzt, Telefonanrufe eindeutig zuzuordnen.

Erfindungsgemäß kann somit eine verbesserte Identifizierung und/oder Authentifizierung eines Nutzers im Rahmen einer Telefonverbindung oder eines Sprachanrufs dadurch erreicht werden, dass allein aufgrund der Sprechcharakteristika des Nutzers eine Identifizierung und/oder Authentifizierung möglich ist. Es wird somit in vielen Fällen (nämlich dann, wenn eine Sprechermerkmalsinformation vorhanden ist und zugeordnet werden kann) möglich zu vermeiden, dass der Nutzer während des Prozesses aufgefordert wird, sich gegenüber dem System (bzw. dem Sprachtelefoniesystem) oder einer anderen Person (z.B. einem Call-Center Agenten) anders als mittels seiner Stimme eindeutig zu erkennen zu geben - etwa seine Kundennummer zu nennen -, wodurch sowohl für den Dienstbetreiber wie auch für den Nutzer Nachteile dahingehend vermieden werden können, dass immer zwei Prozessschritten ausgeführt werden: Schritt 1, währenddessen der Nutzer belegt, wer er ist; Schritt 2, währenddessen Voice-Probe und Voice-Print werden miteinander verglichen.

Erfindungsgemäß ist es daher vorgesehen, dass bei der erstmaligen-Anlage des Voice-Prints (bzw. der Sprechermerkmalsinformation) über eine Telefonverbindung oder einen Sprachanruf Voice-Print (bzw. Sprechermerkmalsinformation) und die dazugehörige Network-Provided CLI (Anruferkennungsinformation) in der dafür vorgesehen Datenbank zusammen gespeichert werden (wobei insbesondere der Network Provided CLI ist die Kennung bzw. der Schlüssel zum Auffinden des dazu gehörigen Voice-Prints, Sprechermerkmalsinformation, ist). Ruft ein Nutzer bei einem Service mit Sprechererkennung an, wird in der Datenbank überprüft, ob die Network-Provided CLI bereits in der Datenbank vorhanden ist.
Falls Ja: wird der Voice Print unter dieser Network-Provided CLI mit der vom Nutzer abzugebenden Voice-Probe verglichen - und die Identifizierung und/oder Authentifizierung des Nutzers ist erfolgt.
Falls Nein: wird der Nutzer aufgefordert, sich gegenüber dem System/einem Agenten eindeutig zu identifizieren (z.B. durch Nennung einer Kundennummer, eines Passwortes o.ä.). Nach der eindeutigen Identifikation des Nutzers wird überprüft, ob bereit ein Voice-Print (bzw. eine Sprechermerkmalsinformation) für den Nutzer hinterlegt wurde.
Falls Ja: wird die Network-Provided CLI (Anruferkennungsinformation) dieses Anrufes seinem Voice-Print (bzw. Sprechermerkmalsinformation) hinzugefügt; einem Voice-Print (Sprechermerkmalsinformation) können immer mehrere Network-Provided CLI (Anruferkennungsinformationen) zugeordnet werden; d.h. allgemein: 1 Voice-Print (Sprechermerkmalsinformation) - n-Network-Provided CLI (Anruferkennungsinformationen).
Falls Nein: erfolgt die erstmalige Anlage des Voice-Prints (bzw. der Sprechermerkmalsinformation).

## Patentansprüche

1. Verfahren zur verbesserten Identifizierung und/oder Authentifizierung eines Nutzers im Rahmen einer Telefonverbindung oder eines Sprachanrufs des Nutzers mit einem Sprachtelefoniesystem (200), wobei bezüglich einer Mehrzahl von Nutzern jeweils wenigstens eine Sprechermerkmalsinformation (231, 232, 233, 234) zusammen mit jeweils wenigstens einer Anruferkennungsinformation (221, 222, 223, 224) vorliegt oder zugreifbar ist, wobei das Verfahren die folgenden Schritte aufweist:
-- in einem ersten Schritt wird, ausgehend von einem bestimmten Telekommunikationsendgerät (20) eines bestimmten Nutzers, eine Telefonverbindung oder ein Sprachanruf zum Sprachtelefoniesystem (200) hergestellt, wobei dem bestimmten Telekommunikationsendgerät (20) oder dessen Anschluss eine bestimmte Anruferkennungsinformation (222) zugeordnet ist und wobei die bestimmte Anruferkennungsinformation (222) bei der Herstellung der Telefonverbindung oder des Sprachanrufs zum Sprachtelefoniesystem (200) übertragen wird,
-- in einem zweiten, dem ersten Schritt nachfolgenden Schritt wird geprüft, ob bezüglich der bestimmten Anruferkennungsinformation (222) wenigstens eine bestimmte Sprechermerkmalsinformation (232) vorliegt oder zugreifbar ist,
-- in einem dritten, dem zweiten Schritt nachfolgenden Schritt wird - sofern die Prüfung, ob bezüglich der bestimmten Anruferkennungsinformation (222) eine bestimmte Sprechermerkmalsinformation (232) vorliegt oder zugreifbar ist, positiv ausfällt - geprüft, ob eine während der Dauer der Telefonverbindung oder des Sprachanrufs erfasste Sprachinformation (250) des Nutzers eine ausreichend große Übereinstimmung mit der bestimmten Sprechermerkmalsinformation (232) aufweist oder ergibt, wobei eine automatisierte Identifizierung und/oder Authentifizierung des bestimmten Nutzers erfolgt, wenn eine solche ausreichend große Übereinstimmung festgestellt wird,
**dadurch gekennzeichnet, dass**
in einem vierten, dem zweiten Schritt nachfolgenden Schritt - sofern die Prüfung, ob bezüglich der bestimmten Anruferkennungsinformation (222) eine bestimmte Sprechermerkmalsinformation (232) vorliegt oder zugreifbar ist, negativ ausfällt - eine Identifizierung und/oder Authentifizierung des bestimmten Nutzers die Übertragung von weiteren Identifizierungs und/oder Authentifizierungsinformationen erfordert,
wobei in einem fünften, dem vierten Schritt nachfolgenden Schritt - sofern die Prüfung, ob bezüglich der bestimmten Anruferkennungsinformation (222) eine bestimmte Sprechermerkmalsinformation (232) vorliegt oder zugreifbar ist, negativ ausfällt und nach einer Identifizierung und/oder Authentifizierung des bestimmten Nutzers - geprüft wird, ob bezüglich des bestimmten Nutzers eine Sprechermerkmalsinformation vorliegt oder zugreifbar ist, wobei, sofern bezüglich des bestimmten Nutzers eine Sprechermerkmalsinformation vorliegt oder zugreifbar ist, eine Zuordnung dieser Sprechermerkmalsinformation zu der bestimmten Anruferkennungsinformation (222) zusätzlich zu einer weiteren Anruferkennungsinformation erfolgt.

2. Verfahren nach Anspruch 1, **dadurch gekennzeichnet, dass** eine automatisierte Identifizierung und/oder Authentifizierung des bestimmten Nutzers verworfen oder verneint wird, wenn die Prüfung im dritten Schritt eine unzureichend große Übereinstimmung der erfassten Sprachinformation (250) mit der bezüglich der bestimmten Anruferkennungsinformation (222) vorliegen bestimmten Sprechermerkmalsinformation (232) ergibt.

3. Verfahren nach einem der vorhergehenden Ansprüche, **dadurch gekennzeichnet, dass** auf der Basis der während der Dauer der Telefonverbindung oder des Sprachanrufs erfassten Sprachinformation (250) des Nutzers eine weitere Sprechermerkmalsinformation generiert wird.

4. Verfahren nach einem der vorhergehenden Ansprüche, **dadurch gekennzeichnet, dass** in einem sechsten, dem dritten Schritt nachfolgenden Schritt - sofern die Prüfung im dritten Schritt eine unzureichend große Übereinstimmung der erfassten Sprachinformation (250) mit der bezüglich der bestimmten Anruferkennungsinformation (222) vorliegen bestimmten Sprechermerkmalsinformation (232) ergibt - eine Identifizierung und/oder Authentifizierung des bestimmten Nutzers die Übertragung von weiteren Identifizierungs und/oder Authentifizierungsinformationen erfordert, wobei auf der Basis der während der Dauer der Telefonverbindung oder des Sprachanrufs erfassten Sprachinformation (250) des Nutzers eine weitere Sprechermerkmalsinformation generiert wird.

5. Verfahren nach einem der vorhergehenden Ansprüche, **dadurch gekennzeichnet, dass** das Sprachtelefoniesystem (200) eine Datenbankeinrichtung (210) aufweist oder dem Sprachtelefoniesystem (200) eine Datenbankeinrichtung (210) zugeordnet ist, wobei in der Datenbankeinrichtung (210) die jeweils wenigstens eine Sprechermerkmalsinformation (231, 232, 233, 234) zusammen mit der jeweils wenigstens einen Anruferkennungsinformation (221, 222, 223, 224) für die Mehrzahl von Nutzern vorliegt.

6. Verfahren nach einem der vorhergehenden Ansprüche, **dadurch gekennzeichnet, dass** die Anruferkennungsinformation (221, 222, 223, 224) einer CLI-Information, Customer Line Identification Number-Information, entspricht, insbesondere einer vom Netz bereitgestellten CLI-Information, Network-provided CLI-Information.

7. Verfahren nach einem der vorhergehenden Ansprüche, **dadurch gekennzeichnet, dass** die Sprechermerkmalsinformation (231, 232, 233, 234) einer Voice-Print-Information der menschlichen Stimme des jeweiligen Nutzers entspricht, welche insbesondere gemäß eines Referenzmodells der menschlichen Stimme erzeugt od er detektiert ist.

8. Verfahren nach einem der vorhergehenden Ansprüche, **dadurch gekennzeichnet, dass** die Sprechermerkmalsinformation (231, 232, 233, 234) jeweils unter Verwendung einer passiven oder aktiven Sprecherkennung einer Sprachinformation erstellt ist oder wird, insbesondere einer während der Dauer der Telefonverbindung oder des Sprachanrufs erfasste Sprachinformation (250) des Nutzers.

9. System, insbesondere Sprachtelefoniesystem (200), zur verbesserten Identifizierung und/oder Authentifizierung eines Nutzers im Rahmen einer Telefonverbindung oder eines Sprachanrufs des Nutzers mit einem Sprachtelefoniesystem (200), wobei bezüglich einer Mehrzahl von Nutzern jeweils wenigstens eine Sprechermerkmalsinformation (231, 232, 233, 234) zusammen mit jeweils wenigstens einer Anruferkennungsinformation (221, 222, 223, 224) vorliegt oder zugreifbar ist, wobei das System derart konfiguriert ist, dass:
-- ausgehend von einem bestimmten Telekommunikationsendgerät (20) eines bestimmten Nutzers, eine Telefonverbindung oder Sprachanruf zum Sprachtelefoniesystem (200) hergestellt wird, wobei dem bestimmten Telekommunikationsendgerät (20) oder dessen Anschluss eine bestimmte Anruferkennungsinformation (222) zugeordnet ist und wobei die bestimmte Anruferkennungsinformation (222) bei der Herstellung der Telefonverbindung oder des Sprachanrufs zum Sprachtelefoniesystem (200) übertragen wird,
-- geprüft wird, ob bezüglich der bestimmten Anruferkennungsinformation (222) eine bestimmte Sprechermerkmalsinformation (232) vorliegt oder zugreifbar ist,
-- geprüft wird - sofern die Prüfung, ob bezüglich der bestimmten Anruferkennungsinformation (222) eine bestimmte Sprechermerkmalsinformation (232) vorliegt oder zugreifbar ist, positiv ausfällt -, ob eine während der Dauer der Telefonverbindung oder des Sprachanrufs erfasste Sprachinformation (250) des Nutzers eine ausreichend große Übereinstimmung mit der bestimmten Sprechermerkmalsinformation (232) aufweist oder ergibt, wobei eine automatisierte Identifizierung und/oder Authentifizierung des bestimmten Nutzers erfolgt, wenn eine solche ausreichend große Übereinstimmung festgestellt wird,
**dadurch gekennzeichnet, dass**
das System derart konfiguriert ist, dass - sofern die Prüfung, ob bezüglich der bestimmten Anruferkennungsinformation (222) eine bestimmte Sprechermerkmalsinformation (232) vorliegt oder zugreifbar ist, negativ ausfällt - eine Identifizierung und/oder Authentifizierung des bestimmten Nutzers die Übertragung von weiteren Identifizierungs und/oder Authentifizierungsinformationen erfordert,
wobei das System derart konfiguriert ist, dass - sofern die Prüfung, ob bezüglich der bestimmten Anruferkennungsinformation (222) eine bestimmte Sprechermerkmalsinformation (232) vorliegt oder zugreifbar ist, negativ ausfällt und nach einer Identifizierung und/oder Authentifizierung des bestimmten Nutzers - geprüft wird, ob bezüglich des bestimmten Nutzers eine Sprechermerkmalsinformation vorliegt oder zugreifbar ist, wobei, sofern bezüglich des bestimmten Nutzers eine Sprechermerkmalsinformation vorliegt oder zugreifbar ist, eine Zuordnung dieser Sprechermerkmalsinformation zu der bestimmten Anruferkennungsinformation (222) zusätzlich zu einer weiteren Anruferkennungsinformation erfolgt.

10. Telekommunikationsnetz (100) mit einem System, insbesondere Sprachtelefoniesystem (200), nach Anspruch 9.

11. Computerprogramm umfassend Befehle, mit deren Hilfe die Schritte eines Verfahrens nach einem der Ansprüche 1 bis 8 durchführbar sind, wenn das Computerprogramm auf einer programmierbaren Einrichtung, insbesondere als Teil des Systems ausgeführt wird oder wenn das Computerprogramm teilweise auf der programmierbaren Einrichtung, insbesondere als Teil des Systems, ausgeführt wird.

12. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf der programmierbaren Einrichtung, insbesondere als Teil des Systems, auszuführenden Teil des Computerprogramms nach Anspruch 11 speichert oder überträgt.

## Claims

1. Method for improved identification and/or authentication of a user within the context of a telephone connection or a voice call of the user with a voice telephony system (200), wherein, in relation to a plurality of users, in each case at least one speaker feature information item (231, 232, 233, 234) is present or is accessible together with in each case at least one caller ID information item (221, 222, 223, 224), wherein the method comprises the steps of:
- in a first step, starting from a specific telecommunication terminal (20) of a specific user, a telephone connection or a voice call to the voice telephony system (200) is established, wherein the specific telecommunication terminal (20) or the connection thereof is allocated a specific caller ID information item (222) and wherein the specific caller ID information item (222) is transmitted as the telephone connection or the voice call to the voice telephony system (200) is being established,
- in a second step subsequent to the first step, a check is made as to whether, in relation to the specific caller ID information item (222), at least one specific speaker feature information item (232) is present or is accessible,
- in a third step subsequent to the second step - if the check as to whether, in relation to the specific caller ID information item (222), a specific speaker feature information item (232) is present or is accessible, has a positive result - a check is made as to whether a voice information item (250) of the user which is acquired during the duration of the telephone connection or the voice call, has or produces sufficient correspondence with the specific speaker feature information item (232), wherein automated identification and/or authentication of the specific user is effected if such sufficient correspondence is confirmed, **characterised in that**, in a fourth step subsequent to the second step - if the check as to whether, in relation to the specific caller ID information item (222), a specific speaker feature information item (232) is present or is accessible, has a negative result - identification and/or authentication of the specific user requires the transmission of further identification and/or authentication information,
wherein, in a fifth step subsequent to the fourth step - if the check as to whether, in relation to the specific caller ID information item (222), a specific speaker feature information item (232) is present or is accessible, has a negative result and after identification and/or authentication of the specific user - a check is made as to whether, in relation to the specific user, a speaker feature information item is present or is accessible, wherein, if in relation to the specific user, a speaker feature information item is present or is accessible, this speaker feature information item is allocated to the specific caller ID information item (222) in addition to a further caller ID information item.

2. Method as claimed in claim 1, **characterised in that** automated identification and/or authentication of the specific user is discarded or results in a negative response, if the check in the third step produces insufficient correspondence between the acquired voice information item (250) and the specific speaker feature information item (232) present in relation to the specific caller ID information item (222).

3. Method as claimed in any one of the preceding claims, **characterised in that** a further speaker feature information item is generated on the basis of the voice information item (250) of the user which is acquired during the duration of the telephone connection or the voice call.

4. Method as claimed in any one of the preceding claims, **characterised in that**, in a sixth step subsequent to the third step - if the check in the third step produces insufficient correspondence between the acquired voice information item (250) and the specific speaker feature information item (232) present in relation to the specific caller ID information item (222) - identification and/or authentication of the specific user requires the transmission of further identification and/or authentication information, wherein a further speaker feature information item is generated on the basis of the voice information item (250) of the user which is acquired during the duration of the telephone connection or the voice call.

5. Method as claimed in any one of the preceding claims, **characterised in that** the voice telephony system (200) has a database device (210) or a database device (210) is allocated to the voice telephony system (200), wherein the respective at least one speaker feature information item (231, 232, 233, 234) is present in the database device (210) together with the respective at least one caller ID information item (221, 222, 223, 224) for the plurality of users.

6. Method as claimed in any one of the preceding claims, **characterised in that** the caller ID information item (221, 222, 223, 224) corresponds to CLI information (customer line identification number information), in particular CLI information provided by the network (network-provided CLI information).

7. Method as claimed in any one of the preceding claims, **characterised in that** the speaker feature information item (231, 232, 233, 234) corresponds to voice print information of the human voice of the respective user, which is generated or detected in particular according to a reference model of the human voice.

8. Method as claimed in any one of the preceding claims, **characterised in that** the speaker feature information item (231, 232, 233, 234) is produced in each case using passive or active speaker identification of a voice information item, in particular a voice information item (250) of the user which is acquired during the duration of the telephone connection or the voice call.

9. System, in particular a voice telephony system (200), for improved identification and/or authentication of a user within the context of a telephone connection or a voice call of the user with a voice telephony systems (200), wherein, in relation to a plurality of users, in each case at least one speaker feature information item (231, 232, 233, 234) is present or is accessible together with in each case at least one caller ID information item (221, 222, 223, 224), wherein the system is configured such that:
- starting from a specific telecommunication terminal (20) of a specific user, a telephone connection or voice call to the voice telephony system (200) is established, wherein the specific telecommunication terminal (20) or the connection thereof is allocated a specific caller ID information item (222) and wherein the specific caller ID information item (222) is transmitted as the telephone connection or the voice call to the voice telephony system (200) is being established,
- a check is made as to whether, in relation to the specific caller ID information item (222), a specific speaker feature information item (232) is present or is accessible,
- if the check as to whether, in relation to the specific caller ID information item (222), a specific speaker feature information item (232) is present or is accessible, has a positive result - a check is made as to whether a voice information item (250) of the user which is acquired during the duration of the telephone connection or the voice call, has or produces sufficient correspondence with the specific speaker feature information item (232), wherein automated identification and/or authentication of the specific user is effected if such sufficient correspondence is confirmed, **characterised in that** the system is configured such that - if the check as to whether, in relation to the specific caller ID information item (222), a specific speaker feature information item (232) is present or is accessible, has a negative result - identification and/or authentication of the specific user requires the transmission of further identification and/or authentication information,
wherein the system is configured such that - if the check as to whether, in relation to the specific caller ID information item (222), a specific speaker feature information item (232) is present or is accessible, has a negative result and after identification and/or authentication of the specific user - a check is made as to whether, in relation to the specific user, a speaker feature information item is present or is accessible, wherein, if in relation to the specific user, a speaker feature information item is present or is accessible, this speaker feature information item is allocated to the specific caller ID information item (222) in addition to a further caller ID information item.

10. Telecommunication network (100) comprising a system, in particular a voice telephony system (200), as claimed in claim 9.

11. Computer program comprising instructions, with the aid of which the steps of a method as claimed in any one of claims 1 to 8 can be performed, if the computer program is executed on a programmable device, in particular as part of the system or if the computer program is partially executed on the programmable device, in particular as part of the system.

12. Computer-readable medium, provided for storing a computer program, or data carrier signal, provided for transmitting a computer program, wherein the computer-readable medium or the data carrier signal stores or transmits the computer program as claimed in claim 11 or wherein the computer-readable medium or the data carrier signal stores or transmits the part of the computer program as claimed in claim 11, which is to be executed on the programmable device, in particular as part of the system.

## Revendications

1. Procédé d'identification et/ou d'authentification améliorée d'un utilisateur dans le cadre d'une liaison téléphonique ou d'un appel vocal de l'utilisateur avec un système de téléphonie vocale (200), dans lequel, pour ce qui concerne une pluralité d'utilisateurs, respectivement au moins une information de caractéristique du locuteur (231, 232, 233, 234) associée à respectivement au moins une information d'identification de l'appelant (221, 222, 223, 224) est disponible ou accessible, dans lequel le procédé comporte les étapes suivantes consistant à :
- à une première étape, établir, à partir d'un terminal de télécommunications (20) spécifique d'un utilisateur donné, une liaison téléphonique ou un appel vocal vers le système de téléphonie vocale (200), dans lequel une information d'identification de l'appelant (222) spécifique est associée au terminal de télécommunications (20) spécifique ou à sa connexion, et dans lequel l'information d'identification de l'appelant (222) spécifique est transmise lors de l'établissement de la liaison téléphonique ou de l'appel vocal vers le système de téléphonie vocale (200),
- à une deuxième étape qui suit la première étape, il est vérifié, pour ce qui concerne l'information d'identification de l'appelant (222) spécifique, qu'au moins une information de caractéristique du locuteur (232) spécifique est présente ou accessible,
- à une troisième étape qui suit la deuxième étape, il est vérifié - à condition que la vérification de la présence ou de l'accessibilité d'une information de caractéristique du locuteur (232) concernant l'information d'identification de l'appelant (222) spécifique, soit positive - qu'une information vocale (250) de l'utilisateur détectée pendant la durée de la liaison téléphonique ou de l'appel vocal présente ou entraîne une concordance suffisante avec l'information de caractéristique du locuteur (232) spécifique, dans lequel une identification et/ou une authentification automatique de l'utilisateur spécifique a lieu lorsqu'une telle concordance suffisante est déterminée,
**caractérisé en ce qu'**à une quatrième étape qui suit la deuxième étape - à condition que la vérification de la présence ou de l'accessibilité d'une information de caractéristique du locuteur (232) spécifique concernant l'information d'identification de l'appelant (222) spécifique, soit négative - une identification et/ou une authentification de l'utilisateur spécifique nécessite la transmission d'informations d'identification et/ou d'authentification supplémentaires,
dans lequel à une cinquième étape qui suit la quatrième étape - à condition que la vérification de la présence ou de l'accessibilité d'une information de caractéristique du locuteur (232) spécifique concernant l'information d'identification de l'appelant (222) spécifique, soit négative et après une identification et/ou une authentification de l'utilisateur spécifique - il est vérifié, pour ce qui concerne l'utilisateur spécifique, qu'une information de caractéristique du locuteur est présente ou accessible, dans lequel, à condition qu'une information de caractéristique du locuteur concernant l'utilisateur spécifique soit présente ou accessible, cette information de caractéristique du locuteur est affectée à l'information d'identification de l'appelant (222) spécifique, en plus d'une information d'identification de l'appelant supplémentaire.

2. Procédé selon la revendication 1, **caractérisé en ce qu'**une identification et/ou une authentification automatique de l'utilisateur spécifique est rejetée ou refusée lorsque la vérification de la troisième étape entraîne une concordance insuffisante de l'information vocale (250) détectée avec l'information de caractéristique du locuteur (232) spécifique présente en ce qui concerne l'information d'identification de l'appelant (222) spécifique.

3. Procédé selon l'une des revendications précédentes, **caractérisé en ce qu'**une information de caractéristique du locuteur supplémentaire est générée sur la base de l'information vocale (250) de l'utilisateur détectée pendant la durée de la liaison téléphonique ou de l'appel vocal.

4. Procédé selon l'une des revendications précédentes, **caractérisé en ce qu'**à une sixième étape qui suit la troisième étape - à condition que la vérification de la troisième étape entraîne une concordance insuffisante de l'information vocale (250) détectée avec l'information de caractéristique du locuteur (232) spécifique présente concernant l'information d'identification de l'appelant (222) spécifique - une identification et/ou une authentification de l'utilisateur spécifique nécessite la transmission d'informations d'identification et/ou d'authentification supplémentaires, dans lequel une information de caractéristique du locuteur supplémentaire est générée sur la base de l'information vocale (250) de l'utilisateur détectée pendant la durée de la liaison téléphonique ou de l'appel vocal.

5. Procédé selon l'une des revendications précédentes, **caractérisé en ce que** le système de téléphonie vocale (200) comporte un système de base de données (210), ou un système de base de données (210) est associé au système de téléphonie vocale (200), dans lequel dans le système de base de données (210), respectivement la au moins une information de caractéristique du locuteur (231, 232, 233, 234) respectivement associée à la au moins une information d'identification de l'appelant (221, 222, 223, 224) est présente pour la pluralité d'utilisateurs.

6. Procédé selon l'une des revendications précédentes, **caractérisé en ce que** l'information d'identification de l'appelant (221, 222, 223, 224) correspond à une information de numéro d'identification de ligne d'abonné, (customer line identification number information, information CLI), en particulier à une information CLI fournie par le réseau.

7. Procédé selon l'une des revendications précédentes, **caractérisé en ce que** l'information de caractéristique du locuteur (231, 232, 233, 234) correspond à une information d'empreinte vocale de la voix humaine de l'utilisateur respectif, qui est en particulier générée ou détectée suivant un modèle de référence de la voix humaine.

8. Procédé selon l'une des revendications précédentes, **caractérisé en ce que** l'information caractéristique du locuteur (231, 232, 233, 234) est ou sera respectivement établie en utilisant une reconnaissance vocale passive ou active d'une information vocale, en particulier une information vocale (250) de l'utilisateur détectée pendant la durée de la liaison téléphonique ou de l'appel vocal.

9. Système, en particulier un système de téléphonie vocale (200), pour l'identification et/ou l'authentification améliorée d'un utilisateur dans le cadre d'une liaison téléphonique ou d'un appel vocal de l'utilisateur vers un système de téléphonie vocale (200), dans lequel, pour ce qui concerne une pluralité d'utilisateurs, respectivement au moins une information de caractéristique du locuteur (231, 232, 233, 234) associée à respectivement au moins une information d'identification de l'appelant (221, 222, 223, 224) est présente ou accessible, dans lequel le système est configuré de telle sorte que :
- à partir d'un terminal de télécommunications (20) spécifique d'un utilisateur donné, une liaison téléphonique ou un appel vocal vers le système de téléphonie vocale (200) est établi, dans lequel une information d'identification de l'appelant (222) spécifique est associée au terminal de télécommunications (20) spécifique ou à sa connexion, et dans lequel l'information d'identification de l'appelant (222) spécifique est transmise lors de l'établissement de la liaison téléphonique ou de l'appel vocal vers le système de téléphonie vocale (200),
- il est vérifié, pour ce qui concerne l'information d'identification de l'appelant (222) spécifique, qu'une information de caractéristique du locuteur (232) spécifique est présente ou accessible,
- il est vérifié - à condition que la vérification de la présence ou de l'accessibilité d'une information de caractéristique du locuteur (232) spécifique concernant l'information d'identification de l'appelant (222) spécifique, soit positive - qu'une information vocale (250) de l'utilisateur détectée pendant la durée de la liaison téléphonique ou de l'appel vocal présente ou entraîne une concordance suffisante avec l'information de caractéristique du locuteur (232) spécifique, dans lequel une identification et/ou une authentification automatique de l'utilisateur spécifique a lieu lorsqu'une telle concordance suffisante est déterminée,
**caractérisé en ce que** le système est configuré de telle sorte que - à condition que la vérification de la présence ou de l'accessibilité d'une information de caractéristique du locuteur (232) spécifique concernant l'information d'identification de l'appelant (222) spécifique, soit négative - une identification et/ou une authentification de l'utilisateur spécifique nécessite la transmission d'informations d'identification et/ou d'authentification supplémentaires,
dans lequel le système est configuré de telle sorte que - à condition que la vérification de la présence ou de l'accessibilité d'une information de caractéristique du locuteur (232) spécifique concernant l'information d'identification de l'appelant (222) spécifique, soit négative et après une identification et/ou une authentification de l'utilisateur spécifique - il est vérifié, pour ce qui concerne l'utilisateur spécifique, qu'une information de caractéristique du locuteur est présente ou accessible, dans lequel, à condition qu'une information de caractéristique du locuteur concernant l'utilisateur spécifique soit présente ou accessible, cette information de caractéristique du locuteur est affectée à l'information d'identification de l'appelant (222) spécifique, en plus d'une information d'identification de l'appelant supplémentaire.

10. Réseau de télécommunications (100) comportant un système, en particulier un système de téléphonie vocale (200) selon la revendication 9.

11. Programme informatique comportant des instructions au moyen desquelles les étapes d'un procédé selon l'une des revendications 1 à 8 peuvent être réalisées, lorsque le programme informatique est exécuté sur un dispositif programmable, en particulier en tant que partie du système, ou lorsque le programme informatique est partiellement exécuté sur le dispositif programmable, en particulier en tant que partie du système.

12. Support lisible par ordinateur, destiné à stocker un programme informatique ou un signal porteur de données, destiné à transmettre un programme informatique, dans lequel le support lisible par ordinateur ou le signal porteur de données stocke ou transmet le programme informatique selon la revendication 11, ou dans lequel le support lisible par ordinateur ou le signal porteur données stocke ou transmet la partie du programme informatique selon la revendication 11 à exécuter sur le dispositif programmable, en particulier en tant que partie du système.
